# FASCICULE DE BREVET EUROPEEN

(11) **EP 1 523 731 B1**
(45) Date de publication et mention de la délivrance du brevet: **27.06.2018**
(21) Numéro de dépôt: 03750802.5
(22) Date de dépôt: 11.07.2003
(51) Int. Cl.: G06T 5/00

(54) **PROCEDE DE TRAITEMENT D'UNE IMAGE ACQUISE AU MOYEN D'UN GUIDE COMPOSE D'UNE PLURALITE DE FIBRES OPTIQUES**
VERFAHREN ZUR VERARBEITUNG EINES BILDES MITTELS EINES LICHTLEITERS, DER AUS MEHREREN OPTISCHEN FASERN BESTEHT
METHOD FOR PROCESSING AN IMAGE ACQUIRED THROUGH A GUIDE CONSISTING OF A PLURALITY OF OPTICAL FIBERS

(30) Priorité: 18.07.2002 FR 0209100
(43) Date de publication de la demande: 20.04.2005
(73) Titulaire: Mauna Kea Technologies, 75010 Paris (FR)
(72) Inventeur: PERCHANT, Aymeric, F-94120 Fontenay sous Bois (FR); LE GOUALHER, Georges, F-35520 La Meziere (FR); BERIER, Frédéric, F-29810 Plouarzel (FR)
(74) Mandataire: Pontet Allano & Associes
(86) Numéro de dépôt international: PCT/FR2003/002197
(87) Numéro de publication internationale: WO 2004/010377

(56) Documents cités:
- WO-A-97/42600
- WO-A1-97/41479
- WO-A2-01/67370
- US-A- 5 257 100
- CHAO ZHANG ET AL: "Nonlinear distortion correction in endoscopic video images" IEEE TRANSACTIONS ON MEDICAL IMAGING, vol. 2, 10 septembre 2000 (2000-09-10), pages 439-442, XP010530017

## Description

La présente invention se rapporte à un procédé de traitement d'une image acquise au moyen d'un guide composé d'une pluralité de fibres optiques. Elle trouve une application particulièrement intéressante dans le domaine de l'imagerie médicale. Toutefois l'invention est d'un cadre plus large puisqu'elle peut s'appliquer à tout domaine dans lequel on réalise de l'imagerie au moyen d'un guide composé d'une pluralité de fibres optiques. Le guide d'image permet d'obtenir une image. Un tel dispositif permet de déporter le balayage laser et la source lumineuse et le récepteur loin de l'objet à observer. Par exemple dans un système à balayage laser avec obtention d'une image confocale, le guide d'image est un assemblage de plusieurs milliers de fibres optiques dont l'arrangement spatial est identique en entrée et en sortie. L'observation d'un objet à travers ce guide pourrait être comparée à une observation via une griller à cause de la perte d'information entre les fibres optiques. La visualisation est donc gênée à cause de la présence des fibres optiques : le motif des fibres optiques apparaît sur l'image acquise. Cela impose un traitement spécifique de façon à éliminer ce motif et améliorer la lisibilité de l'image.

Dans les systèmes actuels, ce traitement spécifique se limite à un filtrage linéaire de l'image acquise.
Le document WO97/42600, désigné D1, décrit une méthode pour le traitement d'une image acquise au moyen d'un faisceau de fibres. Cette méthode a pour objet d'éliminer la présence du réseau des coeurs du faisceau de fibres. Pour ce faire, on réalise une normalisation de l'intensité de chaque coeur du faisceau de fibres par rapport à une image de référence. On réalise ensuite une interpolation des intensités des coeurs de façon à ce que la distribution d'intensité de l'image acquise soit continue. L'interpolation est réalisée à partir d'un maillage triangulaire prédéterminé.
Dans D1, le traitement local sur chaque coeur du faisceau de fibres concerne l'étape de calcul de l'intensité normalisée au cours de laquelle on divise l'intensité acquise par une intensité de référence du même coeur lors de l'acquisition de l'image de référence.

La présente invention a pour but de proposer un nouveau procédé permettant de rendre les images acquises au moyen d'un guide multi-fibres optiques lisibles.

Un autre but de l'invention est de prendre en compte les effets parasites dus à l'appareil d'acquisition dans le traitement de l'image acquise.

On atteint au moins l'un des objectifs précités avec un nouveau procédé de traitement d'image selon la revendication 1.

Avec le procédé selon l'invention, le fait d'isoler les fibres optiques sur l'image, revient à isoler sur l'image, la zone correspondant à chaque fibre. Lorsque les pixels représentant l'injection majoritaire en terme de surface (zone d'influence) dans une fibre sont isolés, on peut alors effectuer des traitements locaux sur chaque fibre optique. La faible diaphonie du guide et les réglages de l'injection permettent de garantir le fait que le contenu informatif de chaque fibre ne dépend pas de la fibre voisine, mais uniquement de la cohérence spatiale de l'objet observé. L'appareil réalisant l'acquisition d'image est réglé de façon à avoir suffisamment de pixels par fibre : on peut ainsi estimer précisément l'information qui est détectée par cette fibre et qui est répartie sur les pixels représentant la fibre optique.

Ainsi, au lieu de traiter l'image de façon globale en réalisant un simple filtrage linéaire comme dans l'art antérieur, dans le procédé selon l'invention on isole chaque fibre optique sur l'image acquise et on traite l'information détectée par chaque fibre optique. Avantageusement, l'appareil réalisant l'acquisition d'image est contrôlé pour garantir les conditions minimales d'efficacité du procédé selon l'invention. Pour ce faire, on peut modifier le taux d'échantillonnage, la qualité d'injection dans les fibres optiques, et le réglage de la chaîne de détection afin de garantir un profil de type "boîte à oeufs", notamment sur l'image témoin.

Avantageusement, lorsque les fibres optiques sont isolées sur l'image et lorsque chaque zone isolée est traitée, de nombreuses applications peuvent être envisagées telles que :
- la reconstruction d'une image sans le motif des fibres : les fibres gênent la lisibilité et les traitements ultérieurs effectués sur l'image;
- le contrôle de la rugosité de la surface du guide, la rugosité va perturber le phénomène d'injection pour le rendre spatialement variant;
- le recalage des images, ou la stabilisation de l'image; le motif des fibres empêche tout recalage des images entre elles, la connaissance de la place des fibres et de l'information observée permettent de recaler les images;

- la super-résolution : on peut utiliser des faibles mouvements dans l'acquisition d'une séquence d'images pour re-échantillonner l'image avec une période spatiale plus faible, et donc obtenir une meilleure résolution;
- la quantification des images : on peut extraire beaucoup plus facilement et précisément des informations sur l'image sans le motif des fibres optiques,
- le contrôle temporel des paramètres internes de l'appareil d'acquisition : la connaissance de la place de chaque fibre et de leurs valeurs optimales d'injection permet de contrôler l'usure du guide, et les variations de certains paramètres optoélectroniques.

Dans le procédé selon l'invention, pour isoler chaque zone, on peut appliquer un masque, correspondant au motif des fibres, sur l'image acquise. Ce masque, correspondant à une image des composantes connexes représentant chaque fibre, est obtenu au cours d'une étape de détection des fibres à partir d'une image témoin.

L'image témoin est une image permettant de bien distinguer les fibres optiques les unes des autres. Elle peut être issue de l'observation d'un miroir, d'un milieu diffusant homogène, d'un milieu fluorescent homogène, elle peut aussi provenir de la retro-diffusion propre à l'intérieur du paquet de fibres optiques. Mais elle peut encore être l'image acquise. A la sortie de la détection, on obtient donc une image des composantes connexes (des segments) représentant chaque fibre optique. Chaque niveau de gris représente un index unique désignant une fibre optique dans le guide.

Selon l'invention, l'étape de détection des fibres peut comprendre les étapes suivantes :
- pré-filtrage de l'image témoin,
- segmentation par région, en utilisant l'algorithme de "ligne de partage des eaux" LPE,
- correction de segments présentant une surface anormalement grande, et
- correction de segments présentant une surface anormalement petite.

Les deux étapes de corrections sont interchangeables, et elles peuvent être réalisées de façon itérative.

Avantageusement, l'étape de pré-filtrage peut comprendre une étape d'ouverture morphologique suivie d'une étape d'inversion d'image. Avec l'ouverture morphologique numérique, on cherche à éliminer les maxima parasites situés sur les fibres optiques. C'est un pré-traitement classique de l'algorithme de "ligne de partage des eaux" LPE effectué lors de la segmentation par région.

A la sortie du pré-filtrage, on obtient une image des fibres optiques filtrées de leurs maxima locaux, et lissées au niveau des zones inter-fibres.

L'étape d'inversion d'image peut être précédée d'une étape de diffusion anisotrope de type scalaire.

Selon l'invention, le pré-filtrage peut comprendre en outre une étape au cours de laquelle on réalise une interpolation au plus proche voisin pour doubler la taille de l'image en vertical et en horizontal.

Avec cette étape d'interpolation, on cherche à simuler des éléments structurant de morphologie mathématique avec un rayon inférieur à un. L'image est doublée pour que l'ouverture morphologique qui suit ne touche pas aux maximum isolés, mais seulement ceux qui sont 8-connexe, mais non 4-connexe (voisins par une diagonale) . L'intérêt est de faire une sélection des maxima éliminés par l'ouverture.

Par ailleurs, en présence d'une pluralité d'images d'acquisition, le pré-filtrage peut comprendre en outre une étape de filtrage temporel.

Avantageusement, le traitement local de chaque zone peut consister à calculer le flux de photon détecté pour chaque zone (correspondant à une fibre donnée) de l'image acquise, et à corriger le biais sur chaque valeur de flux ainsi calculée.

De préférence, on réalise le calcul de flux au moyen d'un estimateur du maximum de vraisemblance calculé sur un profil spécifique d'injection de chaque fibre. Plus précisément, on peut utiliser l'estimateur du maximum de vraisemblance sur la distribution d'amplitude du profil spécifique d'injection dans chaque fibre optique. Le profil est une courbe représentant le taux d'injection en fonction de l'éloignement de la lumière par rapport au centre de la coupe transversale à l'extrémité de la fibre optique. Souvent ce profil est modélisé par une gaussienne.

Suivant un mode de mise en oeuvre de l'invention, en appliquant également le masque sur une image représentant un fond parasite, on calcule également le flux de photon détecté pour chaque zone de l'image de fond, et on soustrait à chaque valeur de flux de chaque zone de l'image acquise, la valeur de flux de chaque zone de l'image de fond correspondante, et on réalise la correction de biais sur le résultat de cette soustraction.

L'image de fond peut être les réflexions parasites sur les systèmes optiques de l'appareil d'acquisition, et donc y compris sur la sortie du guide d'image, mais elle peut également être le décalage, le bruit électronique, de la chaîne de numérisation de l'appareil d'acquisition. Le décalage correspond au terme communément appelé "offset". Si l'offset est dominant sur l'image, on ne peut pas obtenir le fond simplement en retirant l'image, car l'offset dépend du contenu, et n'est donc plus le même. Dans ce cas, on utilise un quantile de l'histogramme pour l'estimer. L'histogramme est celui de l'image acquise lors de la mesure en temps réel, et celui d'une image d'étalonnage lors d'une étape d'étalonnage comme on le verra ci-dessous.

Le fond parasite peut provenir du fond de l'image ou d'un offset de la chaîne de détection.

Selon l'invention, la correction de biais peut consister à séparer spatialement les fibres en différents blocs, à estimer la valeur de biais dans chaque bloc, à interpoler les valeurs des biais de façon à obtenir une valeur de biais pour chaque fibre, et à diviser, pour chaque zone, la valeur de flux obtenue à l'étape précédente par la valeur de biais correspondante ainsi obtenue.

La reconstruction de l'image acquise peut faire intervenir une étape de calibrage pour calibrer le flux de l'image acquise, après traitement local, et une étape de reconstruction mosaïque. On peut utiliser d'autres types de reconstruction, telles que par interpolation ou avec des bases de fonctions radiales.

Par ailleurs, la présente invention peut être mise en oeuvre sans les étapes d'étalonnage et de calibrage. Dans ce cas, l'image témoin peut être l'image acquise.

Pour le calibrage et pour chaque zone de l'image acquise, on peut diviser la valeur du flux obtenue après traitement local par une valeur de flux obtenue à la suite d'une étape d'étalonnage. Cette opération de division permet de compenser les mauvaises injections dans certaines fibres optiques.

Selon une caractéristique avantageuse de l'invention, l'étape d'étalonnage consiste à :
- isoler chaque zone d'une image d'étalonnage en appliquant le masque, correspondant au motif des fibres, sur cette image d'étalonnage,
- calculer le flux de photon détecté pour chaque zone de l'image d'étalonnage, et
- corriger le biais sur chaque valeur de flux ainsi calculée.

L'image obtenue à l'issue de l'étalonnage pourra servir d'étalon à l'image acquise de façon à obtenir une image acquise pour laquelle toutes les fibres optiques du guide auraient été injectées de la même manière.

De préférence, on réalise le calcul de flux au moyen d'un estimateur du maximum de vraisemblance calculé sur le profil spécifique d'injection de chaque fibre. Par ailleurs, en appliquant également le masque sur une image représentant un fond parasite, on peut calculer le flux de photon détecté pour chaque zone de l'image de fond, on peut soustraire à chaque valeur de flux de chaque zone de l'image d'étalonnage, la valeur de flux de chaque zone de l'image de fond correspondante, et on peut réaliser la correction de biais sur le résultat de cette soustraction.

En d'autres termes, au cours de l'étape d'étalonnage, on réalise les mêmes opérations que lors de la mesure, c'est-à-dire lors du traitement d'une image acquise en temps réel. Seulement, à l'étalonnage on se sert d'une image d'étalonnage faisant largement apparaître le motif des fibres optiques. L'étalonnage permet, après détection des fibres sur l'image témoin, de générer une image dans laquelle le taux d'injection va servir d'étalon lors de la mesure en temps réel. Au cours de la mesure, on corrige également le taux d'injection sur l'image acquise, et on calibre le flux observé en fonction de l'image étalon de façon à reconstruire une image acquise sans motif des fibres optiques.

Par biais, on entend une composante basse fréquence, cette composante pouvant provenir de diverses causes.

La correction de biais peut être effectuée lors de l'étalonnage et lors de la mesure en temps réel. Pour le premier cas, cela peut venir du fait que l'étalonnage se fait par exemple sur un miroir plan, et que la courbure de champ va réduire la qualité d'injection au retour sur les bords (qui sont défocalisés). Sur l'objet de mesure, ou dans un milieu diffusant homogène, l'injection reste moins bonne sur les bords, et cela se traduit par un biais similaire au premier quant à sa forme. Le biais peut également provenir d'un problème de vignettage. Généralement, le biais a une symétrie quasi circulaire. L'estimation du biais se fait en divisant l'image en NxN blocs de taille fixe, puis en estimant le biais sur chaque bloc. Pour cela il faut considérer la nature de l'objet observé. Dans le cas d'un objet homogène, le biais peut être acquis en prenant la valeur moyenne ou médiane sur le bloc. Quand il y a un objet, il faut savoir si cet objet est plus sombre ou plus clair que le reste de l'image. A titre d'exemple, le biais peut être multiplicatif, et on prend donc plutôt un opérateur de moyenne ou de médiane (par rapport à un max ou min pour un biais additif). On obtient alors une image de taille NxN qui est utilisée, après interpolation, pour trouver la valeur du biais vue par chaque fibre. On peut utiliser une interpolation bilinéaire par exemple.

La reconstruction mosaïque peut consister à répartir sur toute la surface de chaque zone de l'image acquise, la valeur de flux de chaque zone obtenue à la suite de l'étape de calibrage. On peut ensuite réaliser un filtrage récursif passe-bas de façon à lisser l'image acquise reconstruite.

Selon un mode de mise en oeuvre avantageux de l'invention, l'image témoin et l'image d'étalonnage sont identiques.

D'autres avantages et caractéristiques de l'invention apparaîtront à l'examen de la description détaillée d'un mode de mise en oeuvre nullement limitatif, et des dessins annexés, sur lesquels :
- La figure 1 est une vue schématique globale du procédé de traitement d'image selon l'invention ;
- La figure 2 est un organigramme détaillant les principales étapes d'un processus d'étalonnage selon l'invention ;
- La figure 3 est un organigramme détaillant les principales étapes d'un processus de mesure selon l'invention ; et
- La figure 4 est un organigramme détaillant les étapes finales prenant en compte les processus d'étalonnage et de mesure pour la reconstruction d'une image acquise sans fibres optiques apparentes selon l'invention.

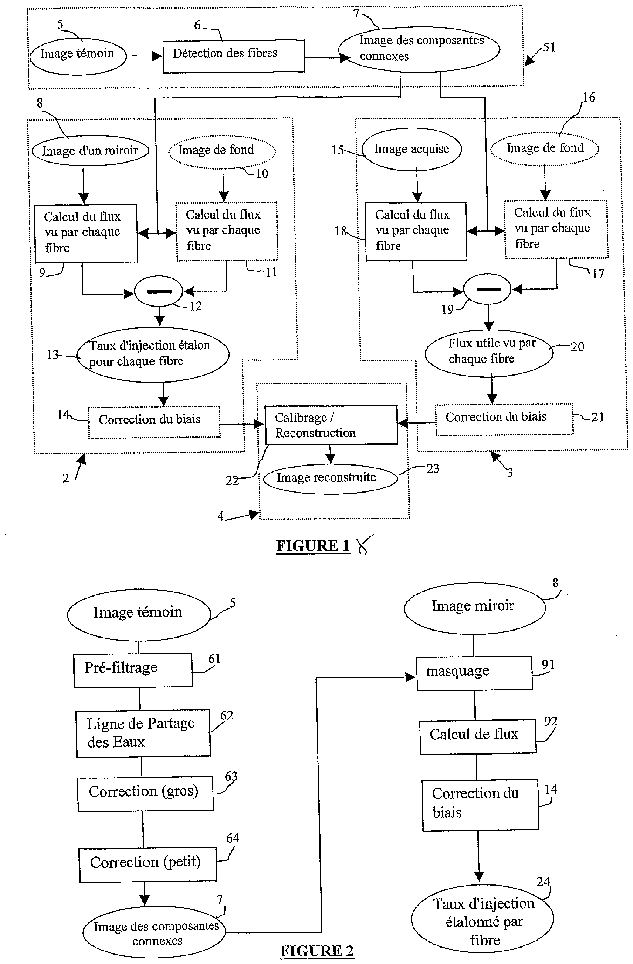

Sur la figure 1 est représenté un schéma global du procédé selon l'invention.

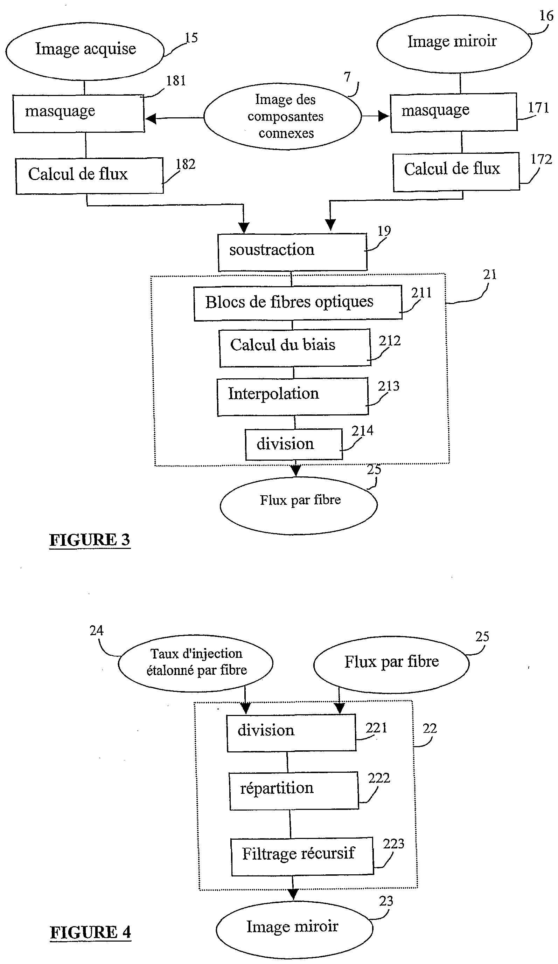

Le procédé peut être scindé en quatre parties : une partie 1 concernant la détection des fibres, une partie 2 d'étalonnage, une partie 3 de mesure, et une partie 4 de reconstruction. Les parties 1 et 2 correspondent au diagramme de la figure 2, alors que la partie 3 correspond au diagramme de la figure 3, et la partie 4 correspond au diagramme de la figure 4.

Sur la figure 1, selon l'invention, lorsqu'on désire acquérir une série d'image, on réalise d'abord une étape d'étalonnage. Pour ce faire, on considère une image témoin 5 à laquelle on fait subir une étape de détection des fibres 6 de façon à obtenir une image 7 des composantes connexes représentant chaque fibre. L'image témoin 5 est une image acquise au moyen d'un système comprenant un guide constitué d'une pluralité de fibres optiques de 10000 à 30000 par exemple. L'image témoin 5 est obtenue de telle sorte que l'on distingue le motif des fibres optiques, c'est à dire de type "boîte à oeuf" : sur le profil de l'image, une fibre se traduisant par une petite montagne entourée de col et de vallée. L'image témoin 5 subit une opération de détection des fibres de façon à obtenir une sorte de masque représentant le motif des fibres optiques. Ce masque est l'image 7 des composantes connexes représentant chaque fibre. A chaque niveau de gris représente un index unique désignant une fibre optique dans le guide.

L'image 7 est ensuite utilisée pour l'étalonnage 2 du système d'acquisition d'image. L'étalonnage a pour but de déterminer une image des taux d'injection de photons fibre à fibre. Cette étape d'étalonnage est nécessaire dans la mesure où chaque fibre présente des propriétés physiques légèrement différentes des autres fibres. Il existe donc une certaine disparité concernant la capacité de chaque fibre optique à véhiculer un même flux de photon.

Pour réaliser l'étalonnage 2, on considère une image 8, ci-dessous appelée image miroir, obtenue en plaçant le miroir devant le système optique du guide d'image. Cette image peut également être celle d'un milieu diffusant homogène, d'un milieu fluorescent homogène, ou de la rétro-diffusion propre à l'intérieur du paquet de fibres optique. Cette image 8 peut également être la même image utilisée en 5, c'est à dire l'image témoin. On utilise le masque 7 pour déterminer le flux de photon de l'image miroir 8 vue par chaque fibre optique au cours de l'étape 9. De façon facultative, on peut également, déterminer le flux de photon vu par chaque fibre au cours de l'étape 11 pour une image de fond parasite 10. Cette image 10 peut correspondre à des réflexions parasites sur les optiques du système d'acquisition, mais aussi à l'offset et/ou le bruit électronique dû à la chaîne de numérisation du système d'acquisition. Le calcul de flux de l'étape 11 fait également intervenir le masque 7 de façon à identifier la zone correspondante à chaque fibre. A l'étape 12, pour chaque fibre optique, on soustrait la valeur de photon de l'image miroir 8 par la valeur de flux de photon de l'image de fond 10. A l'étape 13 on estime que pour chaque fibre optique, la différence obtenue à l'étape 12 correspond au taux d'injection étalon pour chaque fibre. (étape 13).

A l'étape 14, on réalise une correction de biais sur l'image de l'étape 13. L'image issue de l'étape 14 est donc une image présentant pour chaque zone correspondant à une fibre optique, une valeur de flux de photon étalon et corrigé. Cette image issue de l'étape 14 va servir de référence pour une série d'images acquises en temps réel par le système d'acquisition. Les images acquises et traitées en temps réel subissent le traitement illustré dans les parties 3 et 4.

La partie 3 de mesure reçoit une image acquise 15, typiquement l'image d'un objet de mesure. Comme réalisé dans la partie étalonnage 2, on calcule également ici à l'étape 18 le flux de photon vu par chaque fibre en ce qui concerne l'image acquise 15. Pour ce faire, on utilise le masque 7 de façon à identifier sur l'image acquise 15, la zone correspondant à chaque fibre optique. De façon facultative, on considère une image de fond parasite 16 comme précédemment, qui peut être une image réelle, c'est à dire correspondant au fond de l'image acquise 15 ou alors une image estimée correspondant au parasite du système d'acquisition. Cette image de fond 16 subit également une étape 17 au moyen du masque 7 de façon à déterminer le flux de photon vu par chaque fibre. A l'étape 19 on réalise une soustraction. Le résultat de la soustraction est une image présentant pour chaque zone correspondant à une fibre optique donnée, un flux de photon utile. L'étape 21 est une étape facultative au cours de laquelle on réalise une correction de biais sur l'image 20.

La partie 4 de reconstruction reçoit d'une part l'image 20 corrigée et d'une autre part l'image 13 corrigée (dé-biaisée) de façon à effectuer une opération de calibrage 22 en divisant les flux de l'objet observé (élément issu de l'étape 21) par les flux étalons (élément issu de l'étape 14). A l'étape 22 on réalise également une reconstruction de façon à obtenir une image reconstruite 23 sans motif des fibres optiques apparent.

Sur la figure 2 on voit plus en détail le processus 1 de détection des fibres et le processus 2 d'étalonnage. L'opération 6 de détection des fibres fait intervenir quatre opérations :
- un pré-filtrage,
- une "ligne de partage des eaux" LPE correspondant à une segmentation par région ;
- une correction des segments ayant une surface anormalement grande ; et
- une correction des segments ayant une surface anormalement petite.

Les deux opérations de correction sont interchangeables, et on peut également les effectuer en boucle.

L'opération de pré-filtrage 61 reçoit en entrée l'image témoin 5 et génère une image des fibres filtrées de ces maxima locaux, et lissées au niveau des zones inter-fibres. Le pré-filtrage fait intervenir une opération d'ouverture morphologique, suivi éventuellement d'une diffusion anisotrope de type scalaire, puis d'une inversion de l'image. Lorsqu'on est en présence de plusieurs images d'un même objet fixe, on peut effectuer un filtrage temporel des images. On peut également effectuer une interpolation au plus proche voisin pour doubler la taille de l'image en vertical et horizontal.

L'image générée par le pré-filtrage 61 subit ensuite une opération de ligne de partage des eaux 62, permettant l'obtention d'une image des composantes connexes des fibres détectées. L'opération de ligne de partage des eaux, de type conventionnel, va permettre de repérer des segments se trouvant au bord de l'image de façon à les retirer du résultat final. On calcule ensuite les caractéristiques de ces segments obtenus (taille moyenne, écart type, voisinage). L'image issue de l'opération 62 va subir deux corrections 63 et 64 successives. L'opération 63 est une correction des segments ayant une surface anormalement grande. Pour ce faire, on sélectionne les segments qui sont à la fois trop gros par rapport à une taille moyenne et qui ont trop de voisins par rapport à une surface normale des fibres. Ces segments sont re-segmentés avec une ligne de partage des eaux soit sur l'image d'origine, soit sur une image de carte de distance à l'intérieur des segments détectés (dans un segment, distance entre chaque pixel et le bord du segment). Puis, on calcule les caractéristiques des segments obtenus (taille moyenne, écart type des tailles).

En 64, on corrige les segments ayant une surface anormalement petite. On calcule aussi le graphe d'adjacence des segments, puis on décide quelles fibres doivent être obligatoirement fusionnées et celles qui sont juste candidates. Dans tous les cas, l'ensemble des fusions possibles est l'ensemble des fusions avec chaque voisine. Pour les fibres obligatoirement fusionnées, on prend la fusion possible qui donne la valeur de compacité la plus petite. Pour les autres qui sont candidates seulement, on utilise successivement trois filtres pour éliminer les fusions qui donnent de mauvais résultats. Le premier filtre vérifie que la taille après fusion n'est pas trop grande. Le second filtre vérifie que la compacité après fusion ne dépasse pas une valeur maximale. Le dernier filtre vérifie que la fusion améliore la compacité. S'il reste plusieurs fusions, on garde celles qui donnent un résultat de meilleure compacité (la plus petite). Une fois toutes les fusions effectuées sur le graphe d'adjacence, on répercute les résultats sur l'image des composantes connexes, en sortie. Puis on calcule les caractéristiques des segments obtenus (taille moyenne, écart type des tailles) . La seconde correction 64 permet de générer l'image des composantes connexes qui va servir de masque pour l'étalonnage 2 et la mesure 3.

La partie droite de la figure 2 concerne un processus d'étalonnage 2 telle que représenté sur la figure 1 mais de façon simplifiée. En effet, sur la figure 2, les opérations optionnelles 10 et 11 n'apparaissent pas.

L'étape 91 de masquage, consiste à repérer sur l'image miroir 8, la zone ou surface correspondant à chaque fibre optique du guide. L'image 7 des composantes connexes sert de masque. A l'étape 92, pour chaque fibre optique, on calcule le flux provenant de l'objet observé. Le flux est calculé grâce à l'estimateur du maximum de vraisemblance déterminé sur le profil spécifique d'injection de chaque fibre optique. A l'étape 14, on réalise une correction de biais comme on le verra plus en détails sur la figure 3. A la sortie de l'étape 14, on obtient en 24 pour chaque fibre optique, une valeur étalon du taux d'injection de photons.

Sur la figure 3, on distingue le processus de mesure selon l'invention. Ce processus se fait en temps réel. Sur l'image acquise 15, on repère la zone correspondante à chaque fibre optique en effectuant une opération de masquage 181 au moyen du masque 7. On calcule ensuite en 182, pour chaque fibre, le flux provenant de l'objet observé. Comme précédemment, le calcul est réalisé grâce à l'estimateur du maximum de vraisemblance déterminé sur le profil spécifique d'injection de chaque fibre optique. On effectue les mêmes opérations de masquage 171 et de calcul de flux 172 sur une image de fond parasite 16.

A l'étape 19, pour chaque zone correspondant à une fibre optique, on soustrait le flux de fond (172) du flux de l'image acquise (182).

Si l'image de fond n'est pas fournie et que ce fond existe, il faut le soustraire, on calcule alors un offset et/ou bruit électronique du système de mesure grâce à un quantile sur l'histogramme de l'image acquise 15.

On peut ensuite réaliser à l'étape 21 une correction de biais sur l'image issue de la soustraction 19. Dans ce cas, on sépare spatialement en 211 les zones correspondant aux fibres en différents blocs. Dans chacun de ces blocs, on calcul en 212 la valeur du biais grâce à un opérateur donné. Puis en 213, on interpole les valeurs du biais afin d'obtenir une valeur pour chaque fibre. On réalise alors en 214 une division de la valeur du flux vu par chaque fibre par la valeur du biais obtenu.

A l'issue de l'étape 21, on génère une image 25 représentant le flux observé pour chaque fibre.

L'ultime étape de reconstruction prend en compte l'image du taux d'injection étalon 24 et l'image de flux observé 25. L'opération de calibrage a pour but de compenser les pertes d'injection en égalisant le taux d'injection de toutes les fibres optiques de façon à avoir une image dont toutes les fibres ont été injecté de la même façon. Pour cela, on divise en 221 l'image de flux observé 25 par l'image du taux d'injection 24.

On réalise ensuite une reconstruction mosaïque en répartissant à l'étape 222 sur toute la surface correspondant à chaque fibre la valeur obtenue après calibrage (division). Afin de donner un aspect plus régulier, on peut effectuer un filtrage 223 passe-bas gaussien par exemple.

Bien sûr, l'invention n'est pas limitée aux exemples qui viennent d'être décrits et de nombreux aménagements peuvent être apportés à ces exemples sans sortir du cadre de l'invention.

## Revendications

1. Procédé de traitement d'image acquise au moyen d'un guide constitué par une pluralité de fibres optiques, comportant les étapes suivantes : pour chaque fibre optique,
- on isole sur l'image acquise une zone correspondante à cette fibre optique en appliquant un masque correspondant au motif de la pluralité de fibres optiques, ledit masque correspondant en outre à une image des composantes connexes représentant chaque fibre et étant obtenu au cours d'une étape de détection des fibres à partir d'une image témoin;
- on traite localement chaque zone de façon individuelle en réalisant les deux étapes suivantes :
- calcul du flux détecté dans chaque zone de l'image acquise,
- calcul du flux détecté dans chaque zone d'un ensemble d'images de référence incluant une image de fond parasite et une image d'étalonnage, puis
- on calibre le flux de l'image acquise à partir des flux des images de référence, puis
- on reconstruit l'image acquise en éliminant le motif dû aux fibres optiques;
**caractérisé en ce que** ladite étape de détection des fibres comprend les étapes suivantes:
- pré-filtrage de l'image témoin,
- segmentation par région,
- correction de segments présentant une surface anormalement grande, et correction de segments présentant une surface anormalement petite, et **en ce que** la correction de segments comprenant les étapes suivantes :
- sélection des segments anormalement grands et qui ont trop de voisins par rapport à une surface normale des fibres;
- re-segmentation avec une ligne de partage des eaux soit sur l'image d'origine, soit sur une image de carte de distance à l'intérieur des segments détectés ;
- calcul du graphe d'adjacence des segments anormalement petits, avant de décider quelles fibres doivent être obligatoirement fusionnées, avec chaque voisine, et celles qui sont juste candidates.

2. Procédé selon la revendication 1, **caractérisé en ce que** les deux étapes de corrections sont interchangeables.

3. Procédé selon la revendication 1 ou 2, **caractérisé en ce que** les deux étapes de corrections sont réalisées de façon itérative.

4. Procédé selon l'une quelconque des revendications 1 à 3, **caractérisé en ce que** l'étape de pré-filtrage comprend une étape d'ouverture morphologique suivie d'une étape d'inversion d'image.

5. Procédé selon la revendication 4, **caractérisé en ce que** l'étape d'inversion d'image est précédée d'une étape de diffusion anisotrope de type scalaire.

6. Procédé selon l'une quelconque des revendications 1 à 5, **caractérisé en ce que** le pré-filtrage comprend en outre une étape au cours de laquelle on réalise une interpolation au plus proche voisin pour doubler la taille de l'image en vertical et en horizontal.

7. Procédé selon l'une quelconque des revendications 1 à 6, **caractérisé en ce que**, en présence d'une pluralité d'images d'acquisition, le pré-filtrage comprend en outre une étape de filtrage temporel.

8. Procédé selon l'une quelconque des revendications précédentes, **caractérisé en ce que** le traitement local de chaque zone comprend une correction de biais sur chaque valeur calculée du flux de photon détecté pour chaque zone de l'image acquise.

9. Procédé selon la revendication 8, **caractérisé en ce qu'**on réalise le calcul de flux au moyen d'un estimateur du maximum de vraisemblance calculé sur un profil spécifique d'injection de chaque fibre.

10. Procédé selon la revendication 4, **caractérisé en ce qu'**en appliquant également le masque sur une image représentant un fond parasite, on calcule également le flux de photon détecté pour chaque zone de l'image de fond, et on soustrait à chaque valeur de flux de chaque zone de l'image acquise, la valeur de flux de chaque zone de l'image de fond correspondante, et on réalise la correction de biais sur le résultat de cette soustraction.

11. Procédé selon la revendication 10, **caractérisé en ce que** le fond parasite provient du fond de l'image.

12. Procédé selon la revendication 10, **caractérisé en ce que** le fond parasite provient du calcul d'un décalage de la chaîne de détection

13. Procédé selon l'une quelconque des revendications 8 à 12, **caractérisé en ce que** la correction de biais consiste à séparer spatialement les fibres en différents blocs, à estimer la valeur de biais dans chaque bloc, à interpoler les valeurs des biais de façon à obtenir une valeur de biais pour chaque fibre, et à diviser, pour chaque zone, la valeur de flux obtenue à l'étape précédente par la valeur de biais correspondante ainsi obtenue.

14. Procédé selon l'une quelconque des revendications précédentes, **caractérisé en ce que** la reconstruction de l'image acquise fait intervenir une étape de reconstruction mosaïque.

15. Procédé selon la revendication 14, **caractérisé en ce que** pour le calibrage et pour chaque zone de l'image acquise, on divise la valeur du flux obtenue après traitement local par une valeur de flux obtenue à la suite d'une étape d'étalonnage.

16. Procédé selon la revendication 15, **caractérisé en ce que** l'étape d'étalonnage consiste à :
- isoler chaque zone d'une image d'étalonnage en appliquant le masque, correspondant au motif des fibres, sur cette image d'étalonnage,
- calculer le flux de photon détecté pour chaque zone de l'image d'étalonnage, et
- corriger le biais sur chaque valeur de flux ainsi calculée.

17. Procédé selon la revendication 16, **caractérisé en ce qu'**on réalise le calcul de flux au moyen d'un estimateur du maximum de vraisemblance calculé sur le profil spécifique d'injection de chaque fibre.

18. Procédé selon la revendication 17 ou 16, **caractérisé en ce qu'**en appliquant également le masque sur une image représentant un fond parasite, on calcule également le flux de photon détecté pour chaque zone de l'image de fond, on soustrait à chaque valeur de flux de chaque zone de l'image d'étalonnage, la valeur de flux de chaque zone de l'image de fond correspondante, et on réalise la correction de biais sur le résultat de cette soustraction.

19. Procédé selon la revendication 18, **caractérisé en ce que** le fond parasite provient du fond de l'image.

20. Procédé selon la revendication 18, **caractérisé en ce que** le fond parasite provient du calcul d'un décalage et du bruit de la chaîne de détection.

21. Procédé selon l'une quelconque des revendications 14 à 20, **caractérisé en ce que** la reconstruction mosaïque consiste à répartir sur toute la surface de chaque zone de l'image acquise, la valeur de flux de chaque zone obtenue à la suite de l'étape de calibrage.

22. Procédé selon la revendication 21, **caractérisé en ce qu'**on réalise un filtrage passe-bas de façon à rendre plus régulière l'image acquise reconstruite.

23. Procédé selon l'une quelconque des revendications 1 à 22, **caractérisé en ce que** l'image témoin est une image obtenue en plaçant un miroir face au guide.

24. Procédé selon l'une quelconque des revendications 1 à 22, **caractérisé en ce que** l'image témoin est une image obtenue à partir d'un milieu diffusant homogène.

25. Procédé selon l'une quelconque des revendications 1 à 22, **caractérisé en ce que** l'image témoin est une image obtenue à partir d'un milieu fluorescent homogène

26. Procédé selon l'une quelconque des revendications 1 à 22, **caractérisé en ce que** l'image témoin est une image obtenue à partir de la retro-diffusion à l'intérieur du paquet de fibres optiques constituant le guide.

27. Procédé selon l'une quelconque des revendications 1 à 22, **caractérisé en ce que** l'image témoin est l'image acquise.

28. Procédé selon l'une quelconque des revendications 16 à 27, **caractérisé en ce que** l'image témoin et l'image d'étalonnage sont identiques.

29. Appareil d'acquisition d'image au moyen d'un guide constitué par une pluralité de fibres optiques, configuré pour mettre en oeuvre un procédé selon l'une quelconque des revendications précédentes, pour chaque fibre optique, l'appareil comprenant :
- des moyens pour isoler sur l'image acquise une zone correspondante à cette fibre optique en appliquant un masque, correspondant au motif de la pluralité de fibres optiques, ledit masque correspondant en outre à une image des composantes connexes représentant chaque fibre;
- des moyens configurés pour obtenir ladite image des composantes connexes au cours d'une étape de détection des fibres à partir d'une image témoin;
comprenant en outre :
- des moyens pour traiter localement chaque zone de façon individuelle en réalisant les deux étapes suivantes :
- calcul du flux détecté dans chaque zone de l'image acquise,
- calcul du flux détecté dans chaque zone d'un ensemble d'images de référence incluant une image de fond parasite et une image d'étalonnage,
- des moyens de calibrage du flux de l'image acquise à partir des flux des images de référence, et
- des moyens pour reconstruire l'image acquise en éliminant le motif dû aux fibres optiques ;
**caractérisé en ce que** les moyens pour obtenir ladite image des composantes connexes comprennent:
- des moyens de pré-filtrage de l'image témoin;
- des moyens de segmentation par région;
- des moyens de correction de segments présentant une surface anormalement grande, et
- des moyens de correction de segments présentant une surface anormalement petite comprenant :
- des moyens de sélection des segments anormalement grands et qui ont trop de voisins par rapport à une surface normale des fibres;
- des moyens de re-segmentation avec une ligne de partage des eaux soit sur l'image d'origine, soit sur une image de carte de distance à l'intérieur des segments détectés
- des moyens de calcul du graphe d'adjacence des segments anormalement petits,
- des moyens pour décider quelle fibres doivent être obligatoirement fusionnées, avec chaque voisine, et celles que sont juste candidates;

30. Appareil selon la revendication 29, **caractérisé en ce qu'**il comprend des moyens pour modifier le taux d'échantillonnage, la qualité d'injection dans les fibres optiques, et le réglage d'une chaîne de détection afin de garantir un profil "boîte à oeufs".

## Patentansprüche

1. Verfahren zur Verarbeitung eines aufgenommenen Bildes mittels eines Lichtleiters, der von einer Vielzahl von optischen Fasern gebildet ist, umfassend die folgenden Schritte für jede optische Faser:
- auf dem aufgenommenen Bild Isolieren einer dieser optischen Faser entsprechenden Zone, wobei eine Maske angelegt wird, die dem Motiv der Vielzahl von optischen Fasern entspricht, wobei die Maske ferner einem Bild der zugehörigen Komponenten, die jede Faser darstellen, entspricht und während eines Schrittes der Erfassung der Fasern aus einem Kontrollbild erhalten wird;
- lokale Verarbeitung jeder Zone auf individuelle Weise, wobei die zwei folgenden Schritte durchgeführt werden:
- Berechnung des in jeder Zone des aufgenommenen Bildes erfassten Stroms,
- Berechnung des in jeder Zone einer Gesamtheit von Referenzbildern einschließlich eines Hintergrundstörbildes und eines Kalibrierungsbildes, erfassten Stroms, dann
- Kalibrieren des Stroms des aufgenommenen Bildes auf Basis der Ströme der Referenzbilder, dann
- Rekonstruieren des aufgenommenen Bildes durch Beseitigen des Motivs auf Grund der optischen Fasern;
**dadurch gekennzeichnet, dass** der Schritt der Erfassung der Fasern die folgenden Schritte umfasst:
- Vorfiltern des Kontrollbildes,
- Segmentieren pro Region,
- Korrektur von Segmenten, die eine abnormal große Fläche aufweisen, und Korrektur von Segmenten, die eine abnormal kleine Fläche aufweisen,
und dass die Korrektur von Segmenten die folgenden Schritte umfasst:
- Auswahl der abnormal großen Segmente, die zu viele Benachbarte in Bezug zu einer normalen Fläche der Fasern haben;
- Neusegmentieren mit einer Wasserscheide entweder auf dem Ursprungsbild oder auf einem Distanzkartenbild innerhalb der erfassten Segmente;
- Berechnung des Angrenzungsgraphen der abnormal kleinen Segmente, bevor entschieden wird, welche Fasern obligatorisch mit jeder benachbarten verschmolzen werden müssen, und welche nur Anwärter sind.

2. Verfahren nach Anspruch 1, **dadurch gekennzeichnet, dass** die zwei Korrekturschritte untereinander austauschbar sind.

3. Verfahren nach Anspruch 1 oder 2, **dadurch gekennzeichnet, dass** die zwei Korrekturschritte auf iterative Weise durchgeführt werden.

4. Verfahren nach einem der Ansprüche 1 bis 3, **dadurch gekennzeichnet, dass** der Schritt des Vorfilterns einen Schritt der morphologischen Öffnung, gefolgt von einem Schritt der Bildumkehr, umfasst.

5. Verfahren nach Anspruch 4, **dadurch gekennzeichnet, dass** vor dem Schritt der Bildumkehr ein Schritt der anisotropen Diffusion skalaren Typs erfolgt.

6. Verfahren nach einem der Ansprüche 1 bis 5, **dadurch gekennzeichnet, dass** das Vorfiltern ferner einen Schritt umfasst, während dessen eine nächstgelegene Interpolation durchgeführt wird, um die Größe des Bildes vertikal und horizontal zu verdoppeln.

7. Verfahren nach einem der Ansprüche 1 bis 6, **dadurch gekennzeichnet, dass** bei Vorhandensein einer Vielzahl von aufgenommenen Bildern das Vorfiltern ferner einen Schritt der Zeitfilterung umfasst.

8. Verfahren nach einem der vorhergehenden Ansprüche, **dadurch gekennzeichnet, dass** die lokale Verarbeitung jeder Zone eine Schräg-Korrektur des für jede Zone des aufgenommenen Bildes erfassten Photonenstroms umfasst.

9. Verfahren nach Anspruch 8, **dadurch gekennzeichnet, dass** die Stromberechnung mit Hilfe eines Schätzers des auf einem spezifischen Injektionsprofil berechneten Wahrscheinlichkeitsmaximums erfolgt.

10. Verfahren nach Anspruch 4, **dadurch gekennzeichnet, dass**, wenn die Maske auch an ein Bild, das einen Störhintergrund darstellt, angelegt wird, auch der für jede Zone des Hintergrundbildes erfasste Photonenstrom berechnet wird, und von jedem Stromwert jeder Zone des aufgenommenen Bildes der Stromwert jeder Zone des entsprechenden Hintergrundbildes abgezogen wird, und die Schräg-Korrektur am Resultat dieser Subtraktion durchgeführt wird.

11. Verfahren nach Anspruch 10, **dadurch gekennzeichnet, dass** der Störhintergrund vom Hintergrund des Bildes stammt.

12. Verfahren nach Anspruch 10, **dadurch gekennzeichnet, dass** der Störhintergrund von der Berechnung eines Versatzes der Erfassungskette stammt.

13. Verfahren nach einem der Ansprüche 8 bis 12, **dadurch gekennzeichnet, dass** die Schräg-Korrektur darin besteht, räumlich die Fasern in verschiedene Blöcke zu trennen, den Schräg-Wert in jedem Block zu schätzen, die Schräg-Werte zu interpolieren, um einen Schräg-Wert für jede Faser zu erhalten, und für jede Zone den im vorherigen Schritt erhaltenen Stromwert durch den so erhaltenen entsprechenden Schräg-Wert zu dividieren.

14. Verfahren nach einem der vorhergehenden Ansprüche, **dadurch gekennzeichnet, dass** die Rekonstruktion des aufgenommenen Bildes einen Schritt der Mosaikrekonstruktion einsetzt.

15. Verfahren nach Anspruch 14, **dadurch gekennzeichnet, dass** zur Kalibrierung und für jede Zone des aufgenommenen Bildes der Wert des nach einer lokalen Verarbeitung erhaltenen Stroms durch einen Stromwert dividiert wird, der nach einem Kalibrierungsschritt erhalten wurde.

16. Verfahren nach Anspruch 15, **dadurch gekennzeichnet, dass** der Kalibrierungsschritt darin besteht:
- jede Zone eines Kalibrierungsbildes durch Anlegen der Maske entsprechend dem Motiv der Fasern auf dieses Kalibrierungsbild zu isolieren,
- den für jede Zone des Kalibrierungsbildes erfassten Photonenstrom zu berechnen, und
- die Schräge auf jedem so berechneten Stromwert zu korrigieren.

17. Verfahren nach Anspruch 16, **dadurch gekennzeichnet, dass** die Stromberechnung mit Hilfe eines Schätzers des Wahrscheinlichkeitsmaximums, das auf dem spezifischen Injektionsprofil jeder Faser berechnet wurde, erfolgt.

18. Verfahren nach Anspruch 17 oder 16, **dadurch gekennzeichnet, dass**, wenn die Maske auch auf ein einen Störhintergrund darstellendes Bild angelegt wird, auch der erfasste Photonenstrom für jede Zone des Hintergrundbildes berechnet wird, von jedem Stromwert jeder Zone des Kalibrierungsbildes der Stromwert jeder Zone des entsprechenden Hintergrundbildes abgezogen wird, und die Schräg-Korrektur am Resultat dieser Subtraktion vorgenommen wird.

19. Verfahren nach Anspruch 18, **dadurch gekennzeichnet, dass** der Störhintergrund vom Hintergrund des Bildes stammt.

20. Verfahren nach Anspruch 18, **dadurch gekennzeichnet, dass** der Störhintergrund von der Berechnung des Versatzes und dem Rauschen der Erfassungskette stammt.

21. Verfahren nach einem der Ansprüche 14 bis 20, **dadurch gekennzeichnet, dass** die Mosaikrekonstruktion darin besteht, auf der gesamten Oberfläche jeder Zone des aufgenommenen Bildes den Stromwert jeder Zone, der nach dem Kalibrierungsschritt erhalten wird, zu verteilen.

22. Verfahren nach Anspruch 21, **dadurch gekennzeichnet, dass** ein Tiefpassfiltern durchgeführt wird, um das rekonstruierte aufgenommene Bild regelmäßiger zu machen.

23. Verfahren nach einem der Ansprüche 1 bis 22, **dadurch gekennzeichnet, dass** das Kontrollbild ein Bild ist, das durch Anordnen eines Spiegels vor dem Lichtleiter erhalten wurde.

24. Verfahren nach einem der Ansprüche 1 bis 22, **dadurch gekennzeichnet, dass** das Kontrollbild ein Bild ist, das aus einem homogenen streuenden Medium erhalten wurde.

25. Verfahren nach einem der Ansprüche 1 bis 22, **dadurch gekennzeichnet, dass** das Kontrollbild ein Bild ist, das aus einem homogenen fluoreszierenden Medium erhalten wurde.

26. Verfahren nach einem der Ansprüche 1 bis 22, **dadurch gekennzeichnet, dass** das Kontrollbild ein Bild ist, das aus der Rückstreuung innerhalb des den Lichtleiter bildenden optischen Faserpakets erhalten wird.

27. Verfahren nach einem der Ansprüche 1 bis 22, **dadurch gekennzeichnet, dass** das Kontrollbild das aufgenommene Bild ist.

28. Verfahren nach einem der Ansprüche 16 bis 27, **dadurch gekennzeichnet, dass** das Kontrollbild und das Kalibrierungsbild identisch sind.

29. Gerät zur Bildaufnahme mit Hilfe eines Lichtleiters, der von einer Vielzahl von optischen Fasern gebildet ist, das eingerichtet ist, um ein Verfahren nach einem der vorhergehenden Ansprüche für jede Faser einzusetzen, wobei das Gerät umfasst:
- Mittel zum Isolieren auf dem aufgenommenen Bild einer dieser optischen Faser entsprechenden Zone, wobei eine Maske angelegt wird, die dem Motiv der Vielzahl von optischen Fasern entspricht,
wobei die Maske ferner einem Bild der zugehörigen Komponenten, die jede Faser darstellen, entspricht;
- Mittel, die eingerichtet sind, um das Bild der zugehörigen Komponenten während eines Schrittes der Erfassung der Fasern aus einem Kontrollbild zu erhalten;
ferner umfassend:
- Mittel zur lokalen Verarbeitung jeder Zone auf individuelle Weise, wobei die zwei folgenden Schritte durchgeführt werden:
- Berechnung des in jeder Zone des aufgenommenen Bildes erfassten Stroms,
- Berechnung des in jeder Zone einer Gesamtheit von Referenzbildern einschließlich eines Hintergrundstörbildes und eines Kalibrierungsbildes, erfassten Stroms,
- Mittel zum Kalibrieren des Stroms des aufgenommenen Bildes auf Basis der Ströme der Referenzbilder, und
- Mittel zum Rekonstruieren des aufgenommenen Bildes durch Beseitigen des Motivs auf Grund der optischen Fasern;
**dadurch gekennzeichnet, dass** die Mittel zum Erhalt des Bildes der zugehörigen Komponenten umfassen:
- Mittel zum Vorfiltern des Kontrollbildes,
- Mittel zum Segmentieren pro Region,
- Mittel zur Korrektur von Segmenten, die eine abnormal große Fläche aufweisen, und
- Mittel zur Korrektur von Segmenten, die eine abnormal kleine Fläche aufweisen, umfassend:
- Mittel zur Auswahl der abnormal großen Segmente, die zu viele Benachbarte in Bezug zu einer normalen Fläche der Fasern haben;
- Mittel zum Neusegmentieren mit einer Wasserscheide entweder auf dem Ursprungsbild oder auf einem Distanzkartenbild innerhalb der erfassten Segmente;
- Mittel zur Berechnung des Angrenzungsgraphen der abnormal kleinen Segmente,
- Mittel zum Entscheiden, welche Fasern obligatorisch mit jeder benachbarten verschmolzen werden müssen, und welche nur Anwärter sind.

30. Gerät nach Anspruch 29, **dadurch gekennzeichnet, dass** es Mittel umfasst, um die Kalibrierungsrate, die Injektionsrate in die optischen Fasern und die Einstellung einer Erfassungskette zu verändern, um ein "Eierschachtelprofil" zu gewährleisten.

## Claims

1. Method for processing an image acquired by means of a guide consisting of a plurality of optical fibres, comprising following steps: for each optical fibre,
- a zone corresponding to this optical fibre is isolated on the acquired image by applying a mask corresponding to the pattern of the plurality of optical fibres, said mask further corresponding to an image of related components representing each fibre and being obtained during a step of detecting the fibres from a sample image;
- each zone is locally processed individually by realizing following two steps:
- calculation of flux detected in each zone of the acquired image,
- calculation of flux detected in each zone of a set of reference images including an parasite background image and an adjustment image, then
- calibration of the acquired image flux from flux of reference images, then
- the acquired image is reconstructed eliminating the pattern due to the optical fibres;
**characterized in that** said detecting the fibres step comprises following steps:
- prefiltering of the sample image,
- segmentation by region,
- correction of segments having an abnormally large surface, and correction of segments having an abnormally small surface, and **in that** segments correction comprising following steps:
- selection of the segments which are abnormally large et which have too many neighbours relative to a normal surface of the fibres,
- re-segmentation with a watershed either on the original image or on a distance card image inside the detected segments;
- calculation of adjacency graph of abnormally small segments, before deciding which fibres must be fused, with each neighbour, and which are just candidates.

2. Method according to claim 1, **characterized in that** the two corrections stages are interchangeable.

3. Method according to claim 1 or 2, **characterized in that** the two corrections stages are carried out in an iterative way.

4. Method according to any one of claims 1 to 3, **characterized in that** the prefiltering stage comprises a morphological opening stage followed by an image-inversion stage.

5. Method according to claim 4, **characterized in that** the image-inversion stage is preceded by a scalar-type anisotropic scattering stage.

6. Method according to any one of claims 1 to 5, **characterized in that** the prefiltering also comprises a step during which an interpolation to the nearest neighbour is carried out in order to double the size of the image vertically and horizontally.

7. Method according to any one of claims 1 to 6, **characterized in that**, in the presence of a plurality of acquisition images, the prefiltering also comprises a temporal filtering step.

8. Method according to any one of the preceding claims, **characterized in that** the local processing of each zone consists of calculating the photon flux detected for each zone of the acquired image, and correcting the bias on each thus-calculated flux value.

9. Method according to claim 8, **characterized in that** the flux is calculated using an estimator of maximum likelihood calculated on a specific injection profile of each fibre.

10. Method according to claim 4, **characterized in that**, also applying the mask on an image representing a parasite background, the photon flux detected for each zone of the background image is also calculated, and the flux value of each zone of the corresponding background image is subtracted from each flux value of each zone of the acquired image, and the bias correction is carried out on the result of this subtraction.

11. Method according to claim 10, **characterized in that** the parasite background comes from the background of the image.

12. Method according to claim 10, **characterized in that** the parasite background comes from the calculation of an offset of the detection chain.

13. Method according to any one of claims 8 to 12, **characterized in that** the bias correction consists of spatially separating the fibres into different blocks, estimating the bias value in each block, interpolating the bias values so as to obtain a bias value for each fibre, and dividing, for each zone, the flux value obtained in the preceding step by the thus-obtained corresponding bias value.

14. Method according to any one of the preceding claims, **characterized in that** the reconstruction of the acquired image involves a mosaic reconstruction stage.

15. Method according to claim 14, **characterized in that**, for the calibration and for each zone of the acquired image, the flux value obtained after local processing is divided by a flux value obtained following an adjustment step.

16. Method according to claim 15, **characterized in that** the adjustment stage consists of:
- isolating each zone of an adjustment image applying the mask, corresponding to the pattern of the fibres, to this adjustment image,
- calculating the photon flux detected for each zone of the adjustment image, and
- correcting the bias on each thus-calculated flux value.

17. Method according to claim 16, **characterized in that** the flux is calculated using an estimator of maximum likelihood calculated on the specific injection profile of each fibre.

18. Method according to claim 17 or 16, **characterized in that**, also applying the mask to an image representing a parasite background, the photon flux detected for each zone of the background image is also calculated, the flux value of each zone of the corresponding background image is subtracted from each flux value of each zone of the adjustment image, and the bias correction is carried out on the result of this subtraction.

19. Method according to claim 18, **characterized in that** the parasite background comes from the background of the image.

20. Method according to claim 18, **characterized in that** the parasite background comes from the calculation of an offset and from the noise of the detection chain.

21. Method according to any one of claims 14 to 20, **characterized in that** the mosaic reconstruction consists of distributing, over the whole surface of each zone of the acquired image, the flux value of each zone obtained following the calibration step.

22. Method according to claim 21, **characterized in that** a low-pass filtering is carried out so as to make the reconstructed acquired image more regular.

23. Method according to any one of claims 1 to 22, **characterized in that** the sample image is an image obtained by placing a mirror opposite the guide.

24. Method according to any one of claims 1 to 22, **characterized in that** the sample image is an image obtained from a homogeneous scattering medium.

25. Method according to any one of claims 1 to 22, **characterized in that** the sample image is an image obtained from a homogeneous fluorescent medium.

26. Method according to any one of claims 3 to 25, **characterized in that** the sample image is an image obtained from the backscattering inside the bundle of optical fibres constituting the guide.

27. Method according to any one of claims 1 to 22, **characterized in that** the sample image is the acquired image.

28. Method according to any one of claims 16 to 27, **characterized in that** the sample image and the adjustment image are identical.

29. Apparatus for image acquisition using a guide made up of a plurality of optical fibres, configured to implement a method according to any one of the preceding claims, the apparatus comprising:
- means for isolating, on the acquired image, a zone corresponding to this optical fibre by applying a mask corresponding to the pattern of the plurality of optical fibres, said mask further corresponding to an image of related components representing each fibre;
- means configured to obtain said image of related components during a step of detecting the fibres from a sample image;
further comprising:
- means for locally processing each zone individually by realizing following steps:
- calculation of flux detected in each zone of the acquired image,
- calculation of flux detected in each zone of a set of reference images including an parasite background image and an adjustment image,
- calibration means of the acquired image flux from flux of reference images, and
- means for reconstructing the acquired image eliminating the pattern due to the optical fibres;
**characterized in that** means for obtaining said related components image comprise:
- prefiltering means of the sample image,
- segmentation means by region,
- correction means of segments having an abnormally large surface, and
correction means of segments having an abnormally small surface comprising:
- selection means of the segments which are abnormally large et which have too many neighbours relative to a normal surface of the fibres,
- re-segmentation means with a watershed either on the original image or on a distance card image inside the detected segments;
- calculation means of adjacency graph of abnormally small segments,
- means for deciding which fibres must be fused, with each neighbour, and which are just candidates.

30. Apparatus according to claim 29, **characterized in that** it comprises means for modifying the sampling rate, the quality of injection into the optical fibres, and the setting of a detection chain in order to guarantee an "egg box" profile.
